Europäisches Patentamt

**European Patent Office**

**Office européen des brevets**

(19)

(11) Publication number: **0 017 509**
**A1**

(12)

# EUROPEAN PATENT APPLICATION

(21) Application number: **80301117.0**

(22) Date of filing: **08.04.80**

(51) Int. Cl.³: **G 09 F 15/00**

(30) Priority: **05.04.79 GB 7912028**

(43) Date of publication of application:
**15.10.80 Bulletin 80/21**

(84) Designated Contracting States:
**AT BE CH DE FR IT LI NL SE**

(71) Applicant: **B BROWN (HOLBORN) LIMITED**
**32-33, Greville Street**
**London, EC1N 8TD(GB)**

(72) Inventor: **Woodcock, Keith George**
**21, Worksop Road**
**Aston Sheffield, S31 OEB(GB)**

(74) Representative: **Deans, Michael John Percy et al,**
**Lloyd Wise, Tregear & CO. Norman House 105-109**
**Strand**
**London WC2R OAE(GB)**

(54) **Supporting fitments.**

(57) A fitment (2) is described supported on an elongate member (1) provided with at least one elongate slot or groove (3) extending therealong and configured for sliding reception of a root-end portion (4) of the fitment (2) inserted therein. The root-end portion of the fitment (2) is shaped to allow pivotal movement of the fitment about the axis of the slot or groove while located therein. The root-end portion of the fitment is provided with locking means (9) which co-operate with the slot or groove (3) to secure the fitment to the support in a position which may be selected both longitudinally and pivotally.

A display system is described in which one or more fitments are supported from uprights. Each upright comprises an extruded section defining one or more elongate slots or grooves. The one or more fitments have root-end portions received in the slots or grooves so as to be longitudinally slidable therein and so as to be movable therein in the manner of a hinge or of a socket joint. The fitments are selectively lockable in the slots or grooves.

./...

EP 0 017 509 A1

FIG.2.

1

## SUPPORTING FITMENTS

Description

In its broadest context, the present invention is
concerned with the support of fitments generally. More
particularly, but by no means exclusively, the invention
is concerned with display systems of the kind in which
fitments such as panels are supported from uprights.

Many such systems, which may be used for the display
of products or information and also for demountable
partitioning in open-plan office environments, are available
on the market. The available systems are commonly based on
a square or hexagonal module; that is: they include uprights,
usually formed as extrusions, which have slots running therealong spaced about the axis of the upright at $60^{\circ}$ or $90^{\circ}$
angular separations. The panels or the like are fitted
directly into these slots. Based on a hexagonal module, the
panels will form an angle between each other of $60^{\circ}$ or $120^{\circ}$
degrees. Based on a square module, the panels form an angle
of $90^{\circ}$ or an angle of $180^{\circ}$ relative to each other. It is
frequently not easy to fit the systems together or to adjust
them.

The present invention seeks, inter alia, to provide a
display system which is relatively simple in construction and
is readily adjustable to meet the needs of the user.

In one aspect of the present invention, there is provided in combination: a fitment and a support therefor,
the support comprising an elongate member provided with at
least one elongate slot or groove extending therealong and
configured for sliding receipt of a root -end portion of the
fitment inserted therein, the root -end portion of the fitment being shaped to allow pivotal movement of the
fitment about the axis of the slot or groove while
located therein, and the root-end portion of the fitment
being provided with locking means adapted for co-
operation with the slot or groove for securing the fitment
to the support in a position which may be selected both
longitudinally and pivotally.

The support need not comprise a vertical post. It
may for example extend horizontally, or indeed at any angle
between horizontal and vertical depending upon the particular
requirements.

The fitment may comprise virtually anything which it is
desired to support. Examples which spring to mind include
lighting fitments, receptacles, brackets, shelving, and
panels. No doubt other fitments which could usefully be
supported in the manner of the present invention will
readily occur to the reader.

The elongate member may conveniently be formed as an
extrusion of aluminium or its alloys or of plastics. The
slot or groove may conveniently be formed as a part cylindrical surface, and in that case the root-end portion of the
fitment may suitably be formed as a cylinder with an integral
web or flange to which, for example, a display panel may be
coupled by threaded connectors. The pivotal movement of the
fitment relative to the support will then be of the nature
of a hinge. The locking means suitably comprise means
mounted on the root-end portion and which can be expanded by
application of a tool to wedge the root-end portion in the
slot. Preferably, the locking means comprise a threaded
member with a head dimensioned for reception of an Allen Key.

3

In an alternative arrangement, the root-end portion may comprise a ball so that the pivoting of the root-end portion in the slot is in the manner of a socket joint.

Thus, in a second and alternative aspect of the present invention, there is provided a display system comprising one or more fitments supported from uprights, each upright comprising an extruded section defining one or more elongate slots or grooves, and the one or more fitments having root-end portions received in said slots or grooves so as to be longitudinally slidable therein, so as to be moveable therein in the manner of a hinge or of a socket joint, and being selectively lockable therein.

The invention is hereinafter more particularly described by way of example only with reference to the accompanying drawings, in which:-

Fig. 1 shows a horizontal section taken through a display system constructed in accordance with the present invention;

Fig. 2 is a perspective view of the display system of Fig. 1; and

Fig. 3 shows a top plan view of an alternative embodiment of display system also constructed in accordance with the present invention.

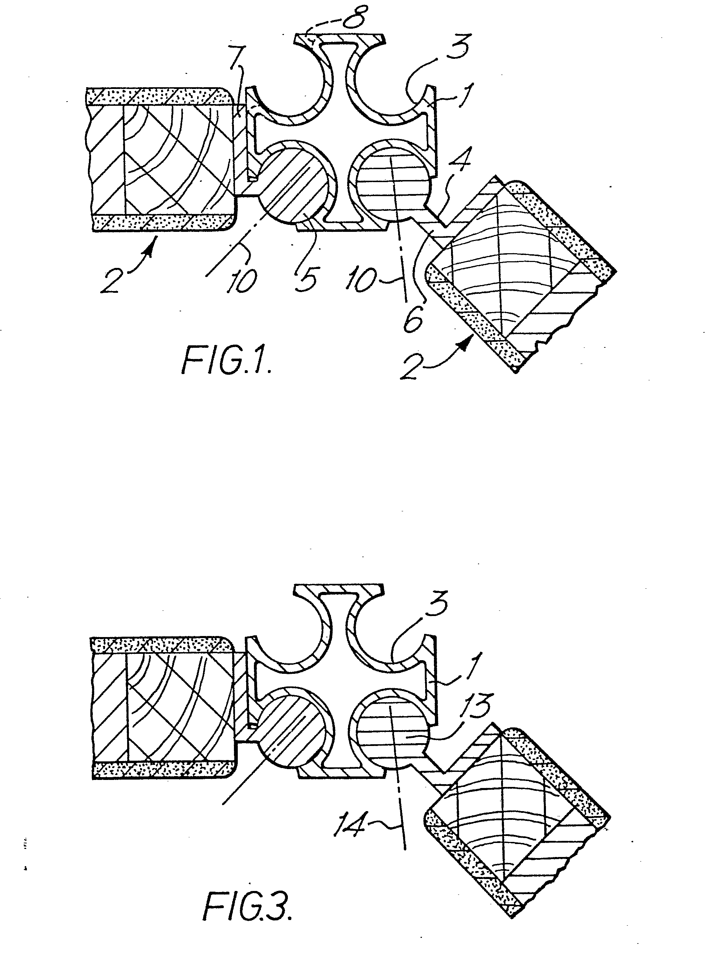

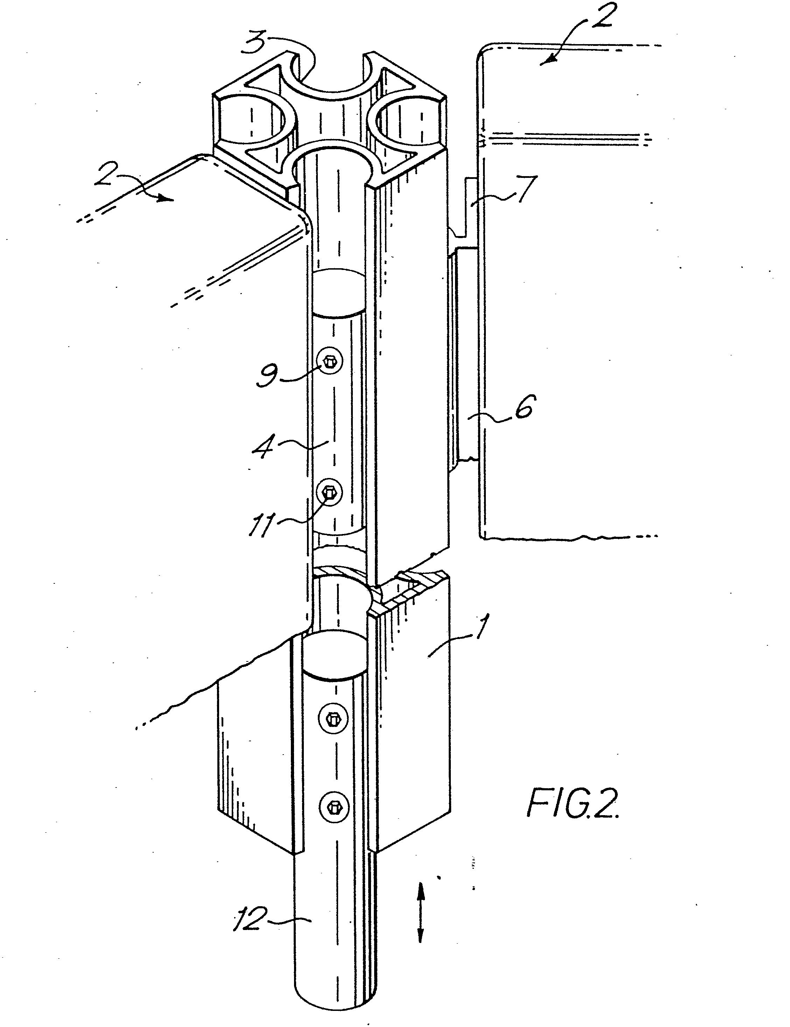

The display system shown in Figs. 1 and 2 comprises one or more uprights 1 (only one is shown in the drawing) consisting of an extruded hollow section, suitably formed of aluminium, one of its alloys, or of plastics. Tow panels 2 are supported from the upright, and the position and orientation of the panels may be varied, as will be explained.

The upright defines four elongate slots or grooves 3 running therealong. Modified arrangements including a greater or lesser number of slots or grooves 3 could readily be designed. The groove 3 illustrated comprises a part

4

cylindrical surface; and the panels 2 are provided with root-end portions 4 which consist of a cylindrical hinge member 5 from which extends a web 6 terminating in a flange 7 at right angles thereto. Alternative, but plainly less preferable, arrangements could be devised in which the slot surface does not consist of a part cylindrical surface and the hinge member 5 is not cylindrical. It is essential, however, that the root-end portion be shaped to allow pivotal movement of the fitment about the axis of the slot or groove 3. The cylindrical hinge member 5 may be inserted into the groove either at its extreme longitudinal end or at an intermediate portion cut away as indicated by dotted lines in Fig. 1 at 8. The hinge member 5 is not a tight fit in the groove. It may be slid axially thereof to position the panel 2 longitudinally and it allows pivotal movement about the axis of the slot or groove 3 to vary the orientation of the panels relative to each other and to the upright.

Locking means 9 (Fig. 2) are provided in the root-end portions of the fitments and suitably comprise threaded members extending, for example, along the lines indicated at 10 in Fig. 1 and adapted to be extended into the slot by turning a headed portion 11 of the locking means, as for example by an Allen Key, so as to wedge the hinge member 5 in the slot.

One or more feet 12 may be provided at the bottom of the upright for supporting the same and these may be mounted in the slots 3 in an exactly similar fashion.

As will be appreciated from the above description, the panels 2 of the embodiment of Figs. 1 and 2 can readily be adjusted in position both vertically and pivotally by loosening the locking means, adjusting the panel by hand and re-locking.

CLAIMS

1.      In combination:  a fitment and a support therefor,
the support comprising an elongate member provided with at
least one elongate slot or groove extending therealong and
configured for sliding receipt of a root-end portion of the
fitment inserted therein, the root-end portion of the fitment
being shaped to allow pivotal movement of the fitment about
the axis of the slot or groove while located therein, and the
root-end portion of the fitment being provided with locking
means adapted for co-operation with the slot or groove for
securing the fitment to the support in a position which may
be selected both longitudinally and pivotally.

2.      The combination of Claim 1, wherein the fitment is
selected from lighting fitments, receptacles, brackets,
shelving, and panels.

3.      The combination of Claim 1 or Claim 2, wherein the
elongate member is formed as an extrusion of aluminium or its
alloys or of plastics.

4.      The combination of any preceding Claim, wherein the
locking means comprises means mounted on the root-end portion
and which can be expanded by application of a tool to wedge
the root-end portion in the slot.

5.      The combination of Claim 4, wherein the locking means
comprises a threaded member with a head dimensioned for
reception of an Allen Key.

6.      In combination to provide a display system:  one or
more fitments supported from uprights, each upright comprising
an extruded section defining one or more elongate slots or
grooves, and the one or more fitments having root-end portions
received in said slots or grooves so as to be longitudinally
slidable therein, so as to be moveable therein in the manner of
a hinge or of a socket joint, and being selectively lockable
therein.

As an alternative to the hinge-like arrangement described above and illustrated in Figs. 1 and 2, the root-end portion of the fitment may, as illustrated in Fig. 3, comprise a ball 13 similarly received in the slot or groove 3 of the upright 1 so as to be slidable therealong. The ball 13 is also provided with locking means extending along the line indicated at 14 in Fig. 3, which locking means may again consist of a threaded member adapted to be turned by an Allen Key. The arrangement of Fig. 3 allows additional degrees of freedom in variation of the position and orientation of the fitment.

In a practical display system, one or more panels may be supported on an upright 1 in the manner shown in Figs. 1 and 2 and one or more display lighting fitments may be supported from the same upright in the manner of Fig. 3 allowing the direction of the light to be varied over a substantial solid angle as well as the position of the light fitment to be varied in height along the upright. The central hollow of the extrusion can conveniently carry electric wiring.

2

7.      The combination of any preceding Claim, wherein the slot or groove is formed as a part cylindrical surface, and the root-end portion of the fitment is formed as a cylinder with an integral web or flange, whereby pivotal movement of the fitment is in the manner of a hinge.

8.      The combination of any of Claims 1 to 6, wherein the slot or groove is formed as a part cylindrical surface, and the root-end portion comprises a ball so that pivoting of the root-end portion in the slot is in the manner of a socket joint.

9.      The combination of Claim 6 or of any Claim appendent thereto, wherein the root-end portions are selectively lockable in the slots or grooves by means mounted on the root-end portion and which can be expanded by application of a tool to wedge the root-end portion in the slot.

10.      The combination of Claim 9, wherein the locking means comprise a threaded member with a head dimensioned for reception of an Allen Key.

1/2

FIG.1.

FIG.3.

FIG.2.

0017509

European Patent
Office

**EUROPEAN SEARCH REPORT**

Application number

EP 80 30 1117

| Category | Citation of document with indication, where appropriate, of relevant passages | Relevant to claim |
|---|---|---|
| | US - A - 3 419 064 (RENZO ODDI CINI)<br>* Claims 1-2,4; page 2, lines 23-70; figures 1,2 *<br><br>-- | 1,2 |
| | BE - A - 634 122 (F.J. BERNARD)<br>* Claim 1; page 8, paragraphs 2-4; figure 16 *<br><br>-- | 1-3,8 |
| | CH - A - 454 407 (PAUL LAMBERT)<br>* Claims; subclaims 1-3; figures 1-2 *<br><br>-- | 1,4 |
| | DE - A - 1 933 378 (T. PUSCHKARSKI)<br>* Claim 1; page 2; figures 1-9 *<br><br>-- | 1 |
| A | GB - A - 1 316 431 (NOVA CONSUL-TANT DESIGNERS LTD.)<br>* Claims 1-5,7-8; page 2, lines 19-55; figures 1-6 *<br><br>-- | 1-3,6 |
| A | DE - A - 1 561 580 (WERNER KLEE)<br>* Claims 1-3; figures 1-3 *<br><br>---- | 1,6 |

**DOCUMENTS CONSIDERED TO BE RELEVANT**

CLASSIFICATION OF THE APPLICATION (Int. Cl. ³)

G 09 F 15/00

TECHNICAL FIELDS SEARCHED (Int.Cl. ³)

G 09 F 15/00
G 09 F 7/18
G 09 F 7/20
F 16 B 5/00
F 16 B 12/02
F 16 N 12/20
F 16 B 12/32
E 04 B 2/74
E 05 D 11/10
A 47 F 5/00

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 22-07-1980 | FRANSEN |

EPO Form 1503.1 06.78